# EUROPÄISCHE PATENTANMELDUNG

(11) **EP 0 583 571 A1**
(43) Veröffentlichungstag der Anmeldung: **23.02.1994**
(21) Anmeldenummer: 93109658.0
(22) Anmeldetag: 17.06.1993
(51) Int. Cl.: A01C 7/18, A01C 5/06

(54) **Sämaschine**

(30) Priorität: 17.07.1992 DE 4223504
(71) Anmelder: Amazonen-Werke H. Dreyer GmbH & Co. KG, D-49205 Hasbergen (DE)
(72) Erfinder: Gattermann, Bernd, D-2872 Hude 1 (DE)

(57) **Zusammenfassung**

Sämaschine mit einem Vorratsbehälter (4), der in seinem unteren Bereich zumindest ein Dosierorgan (6) aufweist, von dem aus das Saatgut (12) über Saatleitungen (13) Säscharen (10, 33) zuführbar ist, wobei den Säscharen (10, 33) jeweils eine angetriebene Vergleichmäßigungsvorrichtung (16) zugeordnet ist.
Um in einfacher Weise die mittels einer Volumendosierung dosierten Saatkörner in etwa gleichmäßigen Abständen durch die Säschare im Boden ablegen zu können, wird vorgeschlagen, daß die den Säscharen (10, 33) zugeordnete Vergleichsmäßigungsvorrichtung (16) als rotierend angetriebene Rolle (17) ausgebildet ist.

## Beschreibung

Die Erfindung betrifft eine Sämaschine, gemäß des Oberbegriffes des Patentanspruches 1.

Eine derartige Sämaschine ist durch die europäische Offenlegungsschrift 0 350 634 bekannt. Bei dieser Sämaschine sind die Vergleichmäßigungsvorrichtungen als Schwingrinnen ausgebildet.

Der Erfingung liegt die Aufgabe zugrunde, eine einfach arbeitende Vergleichsmäßigungsvorrichtung vorzuschlagen, welche sicherstellt, daß die mittels einer Volumendosierung dosierten Saatkörner in etwa gleichmäßigen Abständen durch die Säschare im Boden abgelegt werden.

Diese Aufgabe wird erfindungsgemäß dadurch gelöst, daß die den Säscharen zugeordnete Vergleichsmäßigungsvorrichtung als rotierend angetriebene Rolle ausgebildet ist. Infolge dieser Maßnahme ergibt sich eine sehr einfach ausgebildete und sehr einfach arbeitende Vergleichmäßigungsvorrichtung.

Durch das deutsche Gebrauchsmuster 9104 492 ist eine als rotierend angetriebene Rolle ausgebildete Einstelleinrichtung bekannt, welche die Saatkörner hintereinander ausrichtet, damit sie nicht in einzelnen Paketen oder haufenförmig, sondern regelmäßig und einzeln oder im wesentlichen einzeln abgegeben werden. Diese Rolle ist im Weg des Saatgutes zwischen dem Dosierorgan und der Saatleitung angeordnet und zwar direkt stromabwärts von dem Dosierorgan, so daß die Körner unmittelbar nach dem Verlassen des Dosierorganes von der Rolle aufgefangen werden. Durch diese hinter dem Dosierorgan angeordnete Rolle mag zwar direkt hinter dem Dosierorgan eine Vergleichmäßigung des Saatgutes erfolgen, jedoch wird diese Vergleichmäßigung zumindest teilweise wieder auf dem langen Weg von der unmittelbar dem Dosierorgan zugeordneten Rolle zu den Säscharen durch die Saatleitungenrohre wieder aufgehoben.

Weitere Einzelheiten der Erfindung sind den Unteransprüchen und der Beispielsbeschreibung zu entnehmen. Hierbei zeigen
- Fig. 1: eine erfindungsgemäß ausgebildete Sämaschine in Seitenansicht und in Prinzipdarstellung,
- Fig. 2: die Sämaschine in Teilansicht und in der Ansicht II-II,
- Fig. 3: die in einem Säschar angeordnete Vergleichmäßigungsvorrichtung in Seitenansicht und in Prinzipdarstellung,
- Fig. 4: das Säschar mit der Vergleichmäßigungsvorrichtung gemäß Fig. 3 in der Ansicht IV-IV,
- Fig. 5: die in einem Scheibensäschar angeordnete Vergleichmäßigungsvorrichtung in der Seitenansicht im Teilschnitt und in Prinzipdarstellung und
- Fig. 6: das Säschar gemäß Fig. 5 in der Ansicht VI-VI.

Die Sämaschine 1 kann über die Dreipunktkupplungselemente 2 an den Dreipunktkraftheber eines Schleppers in bekannter und daher nicht dargestellter Weise angekuppelt werden.

Die Sämaschine 1 weist als Fahrwerk die Bodenwalze 3 auf. Weiterhin besitzt die Sämaschine 1 den langgestreckten und trichterförmig ausgebildeten Vorratsbehälter 4. Im unteren Bereich der Trichterspitze 5 des Vorratsbehälters 4 sind die Dosierorgane 6 nebeneinander angeordnet. Die Dosierorgane 6 sind als Dosierräder 7 ausgebildet und drehfest auf die Dosierwelle 8 angeordnet, welche über einen Antriebsmechanismus von dem als regelbaren Antrieb ausgebildeten Regelgetriebe angetrieben wird, welches wiederum über einen Kettenantrieb von der Bodenwalze 3 aus angetrieben wird. Über die rotierend antreibbaren und in ihrer Drehzahl regelbaren Dosierorgane 6 wird die auszubringende Menge oder Zahl von Samenkörner in Verbindung mit dem Regelgetriebe bestimmt.

An dem Rahmen 9 der Sämaschine 1 sind die Säschare 10 über die Gelenke 11 in aufrechter Ebene bewegbar angelenkt. Die Säschare 10 sind zwei hintereinander liegenden Querreihen auf Lücke versetzt hintereinander und nebeneinander mit einem Reihenabstand zueinander angeordnet, und gleichmäßig über die Arbeitsbreite der Sämaschine 1 verteilt. Das von den Dosierrädern 7 mittels Volumendosierung dosierten Samenkörner 12 gelangt über die Saatleitungen 13 zu den Säscharen 10 und wird von diesen in den von den Säscharen 10 gezogenen Saatfurchen 14 im Boden 15 abgelegt. Hinter den Säscharen 10 kann ein Saatstriegel angeordnet sein, mit Hilfe dessen die in den Säfurchen 14 abgelegten Samenkörner 12 wieder mit Erde bedeckt werden.

In den Saatleitungsrohren 13 ist eine Vergleichsmäßigungsvorrichtung 16 angeordnet. Die den Säscharen 10 zugeordnete Vergleichmäßigungsvorrichtung 16 ist als rotierend angetriebene Rolle 17 ausgebildet und weist in bevorzugter Weise eine im Querschnitt gesehen V-förmige Rille 18 auf. Die als Vergleichmäßigungsvorrichtung 16 ausgebildete Rolle 17 ist bezogen auf die Länge der Saatleitung 13 dichter bei den Säscharen 10 als bei den Dosierorganen 6 in der jeweiligen Saatleitung 13 angeordnet. Die Rollen 17 sind auf auf der Vergleichmäßigungswelle 19 drehfest angeordnet. Die Vergleichmäßigungswelle 19 wird über das Regelgetriebe 20 von dem Kettentrieb 21 aus von der Bodenwalze 3 angetrieben. Mittels des Einstellhebels 22 des Regelgetriebes 20 läßt sich die Drehzahl der Rolle 17 einstellen.

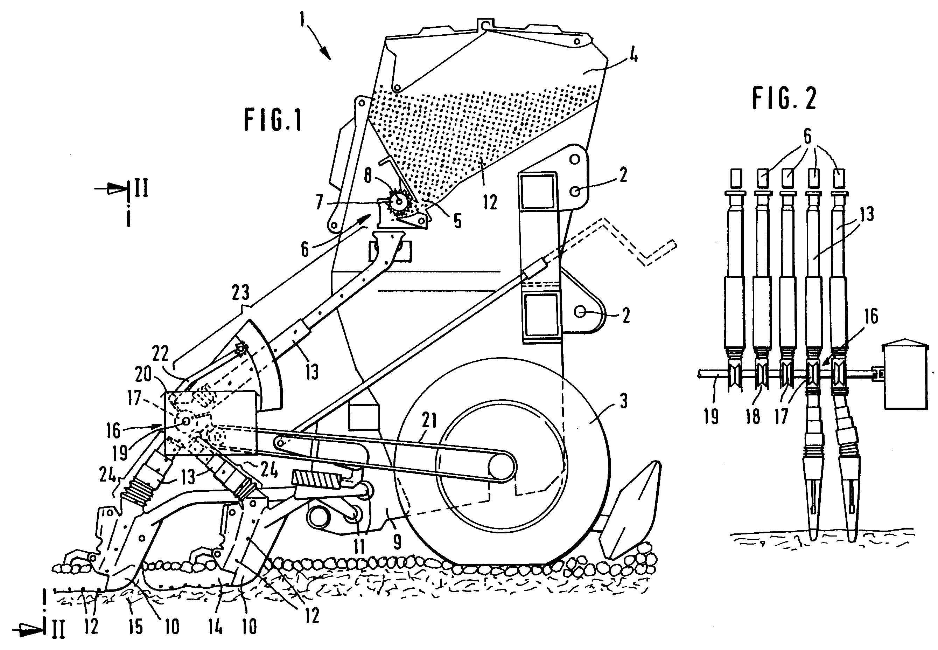

Die von den Dosierrädern dosierten Saatkörner 12 gelangen über den ersten Teil 23 der Saatleitung 13 zu den als rotierend angetriebenen Rollen 17 ausgebildete Vergleichmäßigungsvorrichtung 16. Die Saatkörner 12 werden von diesen Rollen 17 aufgefangen und in vergleichmäßigter Weise zu dem zu den Säscharen 10 führenden zweiten Teil 24 der Saatleitungsrohre 13 bis zum Boden 15 geleitet. Im Boden 15 werden sie, wie Fig. 1 zeigt, in etwa gleichmäßigen Abständen zueinander abgelegt.

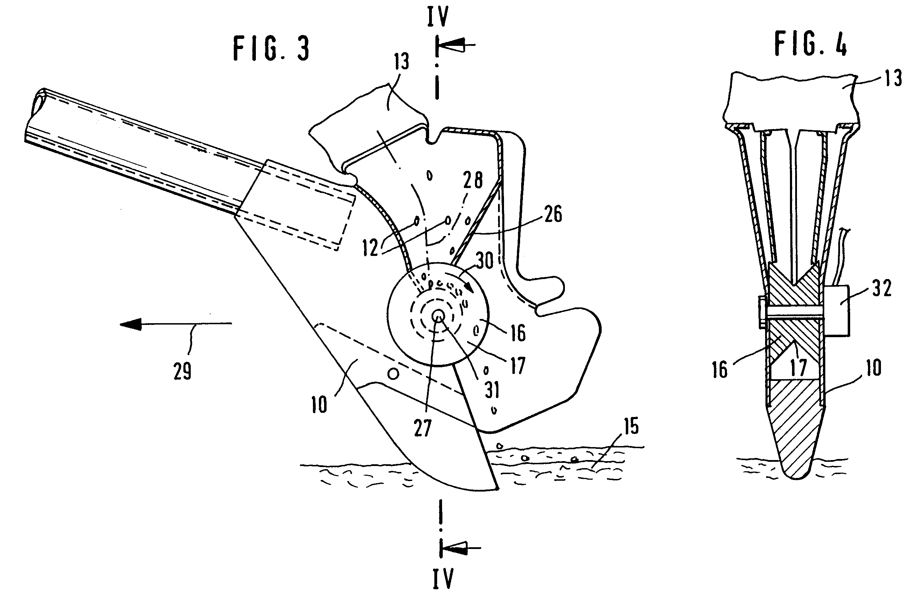

Bei dem Ausführungsbeispiel gemäß Fig. 3 ist die als rotierend angetriebene
Rolle 16 ausgebildete Vergleichmäßigungsvorrichtung nicht in den Saatleitungsrohren 13, sondern im Säschar 10 in integrierter Weise angeordnet. Das sich im Vorratsbehälter 4 befindliche Saatgut wird über das Dosierorgan 6 und den Saatleitungenrohren 13 in das Säschar 10 geleitet. Im Säschar 10 werden die Saatkörner 12 von der Rolle 16 aufgefangen. Die hintere Wand 26 der Verlängerungssaatleitungen 13 im Säschar 10 ist jeweils derart ausgerichtet, daß zumindest der größte Teil der Saatkörner 12 vor der Drehachse 27 der Rolle 16 auf die Rolle 16 geleitet wird. Die Rolle 16 ist bezüglich der Saatleitungen 13 derart im Säschar 10 angeordent, daß sich die Drehachse 27 der Rolle 16 gegenüber der Mittellängsachse 28 des unteren Endes der Saatleitungen 13 bezogen auf die Fahrtrichtung 29 der Sämaschine 1 nach hinten versetzt befindet.

Die Rolle 16 wird derart angetrieben, daß sie im oberen Bereich entgegen der Fahrtrichtung 29 rotiert, wie der Pfeil 30 zeigt. Die Rolle 16 ist auf der Welle 31 drehfest angeordnet. Die Welle 31 ist mit dem als Elektromotor 32 ausgebildeten Antriebsvorrichtung drehfest gekuppelt. Über diesen Elektromotor 32 wird die Rolle 16 rotierend angetrieben. Der Elektromotor 32 ist in der Drehzahl regelbar, so daß die Rolle 16 entsprechend den Erfordernissen mit der richtigen Drehzahl angetrieben werden kann, so daß die Saatkörner 12 in etwa gleichmäßigen Abstand, wie Fig. 3 zeigt, im Boden 15 abgelegt werden kann. Hierbei kann weiterhin eine Regeleinrichtung vorgesehen sein, welche eine Wegstreckenmeßeinrichtung aufweist, und mittels welcher die Drehzahl der Rolle in Abhängigkeit der Geschwindigkeit der Sämaschine 1 und der Aussaatmenge regelbar und vorwählbar einstellbar ist.

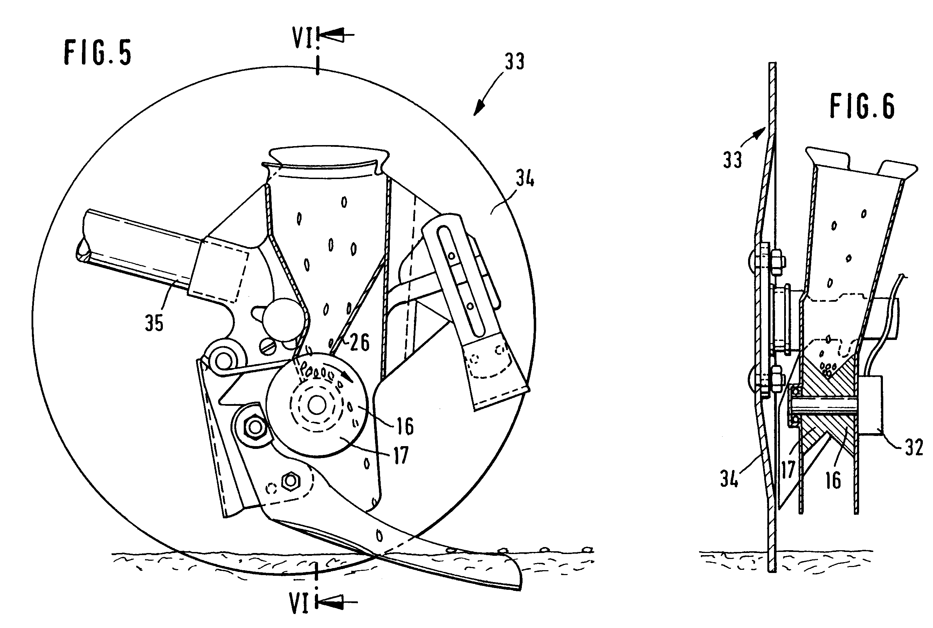

Gemäß dem Ausführungsbeispiel nach den Figuren 5 und 6 ist das Säschar im Vergleich zu den vorherigen Ausführungsbeispielen nicht als Normalsäschar, sondern als Scheibensäschar 33 ausgebildet. Die Scheibe 34 des Scheibensäschares 33 ist mittels einer Lagerung in bekannter Weise an der Scharhalterung 35 gelagert. In dieses Scheibensäschar 33 ist wiederum die als rotierend angetriebene Rolle 16 ausgebildet Vergleichmäßigungsvorrichtung in integrierter Weise angeordnet. Auch diese Rolle 16 wird von einem regelbaren Elektromotor 32 angetrieben.

Es ist jedoch auch möglich, anstelle des Elektromotores 32 eine Antriebsübertragungsvorrichtung zwischen der rotierenden Scheibe 34 des Säschares 33 und der Rolle 16 vorzusehen, so daß die Rolle 16 von der Scheibe 34 des Säschares 33 über eine Übertragungseinrichtung angetrieben wird.

## Patentansprüche

1. Sämaschine mit einem Vorratsbehälter (4), der in seinem unteren Bereich zumindest ein Dosierorgan (6) aufweist, von dem aus das Saatgut (12) über Saatleitungen (13) Säscharen (10, 33) zuführbar ist, wobei den Säscharen (10, 33) jeweils eine angetriebene Vergleichsmäßigungsvorrichtung (16) zugeordnet ist, dadurch gekennzeichnet, daß die den Säscharen (10, 33) zugeordnete Vergleichsmäßigungsvorrichtung (16) als rotierend angetriebene Rolle (17) ausgebildet ist.

2. Sämaschine nach Anspruch 1, dadurch gekennzeichnet, daß die Rolle (17) zumindest eine im Querschnitt gesehen V-förmige Rille (18) aufweist.

3. Sämaschine nach Anspruch 1, dadurch gekennzeichnet, daß die Rolle (17) von einer in der Drehzahl regelbaren Antriebsvorrichtung, wie beispielsweise einem Elektromotor (32) antreibbar ist.

4. Sämaschine nach einem oder mehreren der vorstehenden Ansprüche, dadurch gekennzeichnet, daß eine Regeleinrichtung vorgesehen ist, welche eine Wegstreckenmeßeinrichtung aufweist und mittels welcher die Drehzahl der Rolle (17) in Abhängigkeit der Geschwindigkeit der Sämaschine (1) und der Aussaatmenge regelbar und vorwählbar einstellbar ist.

5. Sämaschine nach einem oder mehreren der vorstehenden Ansprüche, dadurch gekennzeichnet, daß die Säschare als Scheibenschare (33) ausgebildet sind, daß die Vergleichmäßigungsrolle über eine Antriebsübertragungsvorrichtung jeweils von dem Scheibenschar (33) antreibbar ist.

6. Sämaschine nach Anspruch 1, dadurch gekennzeichnet, daß die Rolle (17) von einem auf dem Boden abrollenden Element (34) angetrieben wird.

7. Sämaschine nach Anspruch 1, dadurch gekennzeichnet, daß die Rolle (17) derart angetrieben wird, daß sie in ihrem oberen Bereich entgegen der Fahrtrichtung (29) rotiert.

8. Sämaschine nach Anspruch 7, dadurch gekennzeichnet, daß die Rolle (17) bezüglich der Saatleitung (13) derart im Säschar (10, 33) angeordnet ist, daß sich die Drehachse (27) der Rolle (17) gegenüber der Mittellängsachse (28) des unteren Endes der Saatleitungen (13) nach hinten versetzt befindet.

9. Sämaschine nach Anspruch 7 und/oder 8, dadurch gekennzeichnet, daß die hintere Wand (26) der Saatleitungen derart ausgerichtet ist, daß zumindest der größte Teil der Saatkörner vor der Drehachse (27) der Rolle (17) auf die Rolle (17) geleitet werden.

10. Sämaschinen nach Anspruch 1, dadurch gekennzeichnet, daß die Vergleichmäßigungsvorrichtung im Säschar (10, 33) angeordnet ist.

11. Sämaschine nach Anspruch 1, dadurch gekennzeichnet, daß die Vergleichmäßigungsvorrichtung (16) jeweils in den von den Verteil- oder Dosierorganen (6) zu den Säscharen (10, 33) führenden Saatleitungen (13) angeordnet ist, daß die Vergleichmäßigungsvorrichtung (16) sich auf die Länge der Saatleitungen bezogen dichter bei den Säscharen (10, 33) als bei den Verteil- oder Dosierorganen (6) in der jeweiligen Saatleitung (13) angeordnet ist.

12. Vergleichsmäßigungsvorrichtung zur Anordnung in Säschare von Sämaschinen gemäß einem oder mehreren der Ansprüche 1 bis 11.
